## Europäisches Patentamt

## European Patent Office

## Office européen des brevets

(19)

(11) Publication number: **0 043 860**

**B1**

(12) **EUROPEAN PATENT SPECIFICATION**

(45) Date of publication of patent specification: **02.05.84**

(51) Int. Cl.³: **F 16 J 15/40**

(21) Application number: **81900265.0**

(22) Date of filing: **16.01.81**

(86) International application number:
**PCT/JP81/00011**

(87) International publication number:
**WO 81/02051 23.07.81 Gazette 81/17**

(54) **SEAL RING TYPE AXLE SEAL DEVICE.**

(30) Priority: **17.01.80 JP 804213/80**

(43) Date of publication of application:
**20.01.82 Bulletin 82/3**

(45) Publication of the grant of the patent:
**02.05.84 Bulletin 84/18**

(84) Designated Contracting States:
**DE FR GB**

(56) References cited:
**GB - A - 1 113 623**
**JP - Y - 53 /47 167**
**US - A - 3 132 906**
**US - A - 3 756 673**

(73) Proprietor: **MITSUBISHI DENKI KABUSHIKI KAISHA**
**2-3, Marunouchi 2-chome Chiyoda-ku Tokyo 100 (JP)**

(72) Inventor: **OISHI, Norio**
**Mitsubishi D.K.K. Kobe Seisakusho, 1-2 Wadasakicho**
**1-chome Hyogo-ku Kobe-shi Hyogo 652 (JP)**
Inventor: **SHIMAZU, Toshinari**
**Mitsubishi D.K.K. Kobe Seisakusho, 1-2 Wadasakicho**
**1-chome Hyogo-ku Kobe-shi Hyogo 652 (JP)**
Inventor: **SUGANAMI, Takuya**
**Mitsubishi D.K.K. Chuo Kenkyusho, 80 Azanakano**
**Minamishimizu Amagasaki-shi Hyogo 661 (JP)**
Inventor: **MASUDA, Takahiro**
**Mitsubishi D.K.K- Chuo Kenkyusho, 80 Azanakano**
**Minamishimizu Amagasaki-shi Hyogo 661 (JP)**

(74) Representative: **Wright, Peter David John et al,**
**R.G.C. Jenkins & Co. 12-15, Fetter Lane London EC4A 1PL (GB)**

Courier Press, Leamington Spa, England.

Seal ring type axle seal device

## Field of technology

The present invention relates to a ring type shaft seal which has an improved floating characteristic and provides more uniform temperature distribution during the operation.

## Background of technology

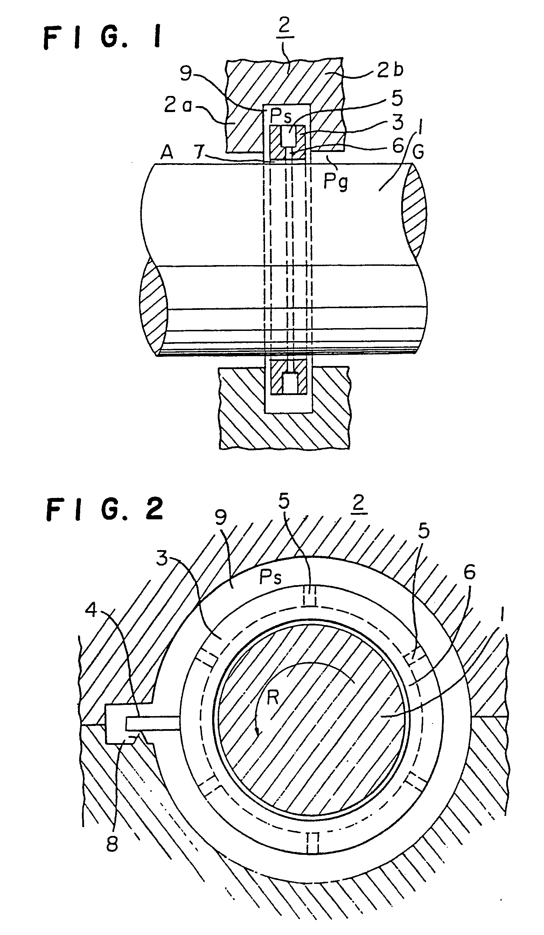

Figures 1 and 2 show a conventional ring type shaft seal for sealing a fluid such as a highly pressurized gas or liquid.

In the figures, the reference numeral (1) designates a rotating shaft; (2) designates a housing having side walls (2a), (2b) through which the rotating shaft (1) passes; (3) designates a seal ring formed by a pair of annular parts; (4) designates an antirotation pin secured to the seal ring (3) to prevent it rotating; (5) designates radial inlets for a sealing liquid for sealing a highly pressurized fluid, which inlets are provided in the outer surface of the seal ring at plural positions and communicate with a single annular groove (6); (7) designates a gap formed between the seal ring and the rotating shaft (1); (8) designates an antirotation pin support formed in the housing (2); and (9) designates an annular space also formed in the housing (2) for feeding the sealing liquid to the radial inlets (5).

Operation of the conventional device having the structure described above will be explained.

The sealing liquid in the housing (2) passes through the inlets (5) of the seal ring (3) to fill the annular groove (6), and provides a liquid film (not shown in the figures) in the gap (7) formed between the rotating shaft (1) and the seal ring (3), and flows, on the one hand, to the high pressure fluid side (shown by the symbol G) and on the other hand, to a low pressure side as atmosphere (shown by the symbol A). The pressure (PS) of the sealing liquid is maintained slightly higher than the pressure (PG) of the fluid to be sealed (gas or liquid) whereby leakage of the fluid to be sealed to the lower pressure side is prevented. The seal ring (3), during operation, floats by hydrodynamic force, producing the liquid film, as a result of the revolution of the rotating shaft (1) so that the seal ring operates in a non-contacting manner, i.e. maintaining a gap (7) between itself and the rotating shaft (1).

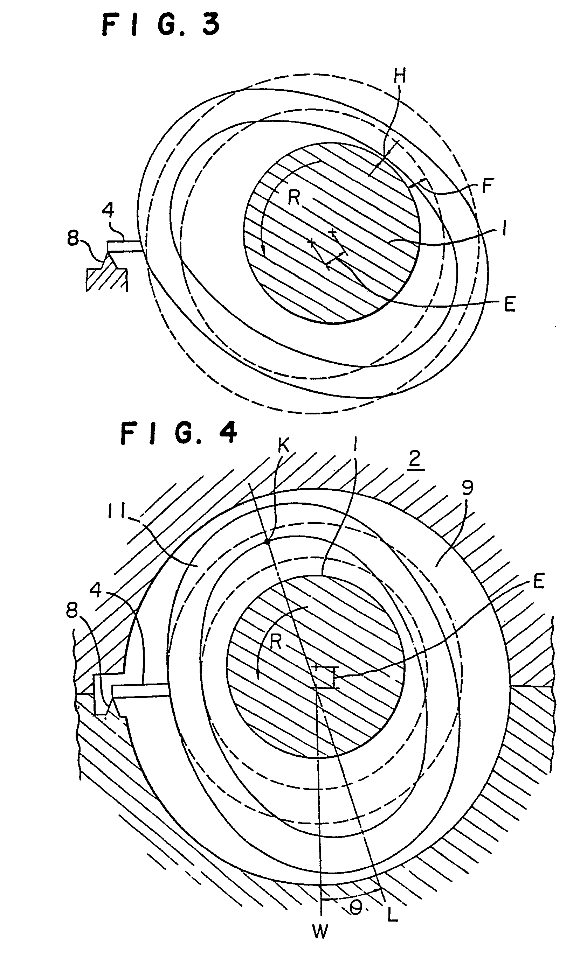

In the conventional shaft seal, the inner periphery of the seal ring (3) is manufactured as a true circle while the seal ring generally operates eccentrically in relation to the rotating shaft (1) as shown by dotted lines in Figure 3 whereby heat produced in the liquid film formed in the gap (7) through the revolution of the rotating shaft (1) is not uniformly distributed on the inner surface of the seal ring and the seal ring becomes elliptically shaped through thermal deformation as shown by the solid line in the figure. The minimum liquid film thickness (F) existing when no thermal deformation has occurred is further reduced to the thickness (H) as shown in Figure 3. This results in an excessive temperature increase in the inner surface of the seal ring (3) and contact with the rotating shaft (1), thereby having an adverse effect on the vibration of the shaft.

## Summary of the invention

It is an object of the present invention to overcome the disadvantages of the conventional device and to provide a ring type shaft seal which provides a uniform temperature distribution about the inner periphery of the seal ring by forming the inner periphery of the seal ring, prior to use, in a predetermined elliptical shape and by fitting the seal ring into a housing in an inclined state so that the angle formed by the longitudinal axis of the ellipse and the direction of the force of gravity on the seal ring, measured in the direction of revolution of the rotating shaft is smaller than 90° and which attains an excellent shaft-sealing function by reducing the difference between the maximum and minimum thicknesses of the liquid film produced between the seal ring and the rotating shaft.

In accordance with the present invention there is provided a ring type shaft seal comprising a seal ring held in a housing and fitted loosely around a shaft passing through said housing, said shaft being rotatable in a predetermined direction of revolution and said seal ring being adapted to attain a floating state upon the rotating shaft when sealing liquid is forced into said housing, characterized in that the inner periphery of said seal ring is substantially elliptical and is held in an inclined state so that the angle formed by the longitudinal axis of the ellipse and the direction of the force of gravity on said seal ring measured in the direction of revolution of said shaft is smaller than 90°.

## Brief description of the drawings

Figure 1 is a sectional view of a conventional ring type shaft seal;

Figure 2 is a sectional view taken along line II—II of Figure 1;

Figure 3 is a sectional view for illustrating the operation of the seal ring of the conventional shaft seal; and

Figure 4 is a sectional view showing the operation of an embodiment of the seal ring of a ring type shaft seal of the present invention.

## Preferred embodiment of the invention

The structure of an embodiment of the shaft seal of the present invention will be described with reference to Figure 4.

In the figure, the structures of a rotating shaft (1), a housing (2), an antirotation pin (4), an inlet for sealing liquid (5), an annular groove (6), an antirotation pin support (8) and an annular feeding space (9) are the same as those of the conventional seal and the description is omitted. The reference numeral (11) designates an elliptically shaped seal ring mounted around the rotating shaft (1) within the housing (2) so as to incline the longitudinal axis direction L of the ellipse to the direction W of the force of gravity on the seal ring measured in the direction of revolution R by an angle $\theta$.

The operation of the shaft seal of the present invention having the structure described above will be explained.

In Figure 4, the elliptical seal ring (11) is held within the housing (2) so that the angle formed by the longitudinal axis L of the ellipse and the direction W measured in the direction of revolution R of the rotating shaft (1) is a suitable angle $\theta$ smaller than 90°.

Frictional heat is produced in the liquid film on the inner surface of the seal ring (11) by the revolution of the rotating shaft (1). Since the seal ring (11) operates with an eccentricity E in relation to the rotating shaft (1), temperature distribution on the inner surface of the seal ring becomes irregular due to the frictional heat and the portion at the point K in the drawing is most heated. Accordingly, a thermal deformation of the seal ring (11) occurs as a result of the irregular distribution in temperature so as to provide a truly circular seal ring as shown by a dotted line in the drawing.

The change in shape of the seal ring from that shown by the solid line to that shown by the dotted line causes a uniform distribution in thickness of the liquid film on the inner surface of the seal ring in a circumferential direction. Thus a uniform temperature around the inner surface of the seal ring is attained and, hence, smooth sealing performance can be obtained.

In the embodiment described above, the entire shape of the seal ring (11) is elliptical. The same effect can be obtained by shaping only the inner part of the seal ring elliptically.

Industrial applicability

The present invention can be applied to the sealing of a part of an apparatus such as a turbine generator filled with a highly pressurized gas, in which part the shaft of the apparatus extends from the wall of the apparatus.

**Claim**

A ring type shaft seal comprising a seal ring (11) held in a housing (2) and fitted loosely around a shaft (1) passing through said housing, said shaft being rotatable in a predetermined direction of revolution and said seal ring being adapted to attain a floating state upon the rotating shaft when sealing liquid is forced into said housing, characterized in that the inner periphery of said seal ring (11) is substantially elliptical and is held in an inclined state so that the angle ($\theta$) formed by the longitudinal axis (L) of the ellipse and the direction of the force of gravity on said seal ring measured in the direction of revolution of said shaft is smaller than 90°.

**Revendication**

Joint étanche de type annulaire pour arbre comprenant un joint étanche 11 maintenu dans un logement 2 et monté autour d'un arbre 1, sans le serrer, qui traverse ledit logement, ledit arbre pouvant tourner selon un sens de rotation prédéterminée et le joint étanche étant apte à atteindre un état flottant sur l'arbre tournant lorsque du liquide d'étanchéité est introduit sous pression dans le logement, caractérisé en ce que la périphérie intérieure du joint étanche 1 est sensiblement elliptique et est maintenu à l'état incliné de façon que l'angle $\theta$ formé entre l'axe longitudinal L de l'ellipse et la direction de la force de la pesanteur aggissant sur le joint étanche, angle mesuré dans le sens de rotation de l'arbre, soit inférieur à 90°.

**Patentanspruch**

Ringförmige Wellendichtung mit einem Dichtring (11), der in einem Gehäuse (2) gehalten ist und mit Spiel eine das Gehäuse durchsetzende Welle (1) umgibt, die in einer vorbestimmten Drehrichtung drehbar ist, wobei der Dichtring einen Schwimmzustand auf der Welle annehmen kann, wenn eine Dichtflüssigkeit in das Gehäuse degrückt wird, dadurch gekennzeichnet, daß der innere Umfang des Dichtrings (11) im wesentlichen elliptisch ist und in geneigtem Zustand gehalten ist, so daß der Winkel ($\theta$), der zwischen der Längsachse (L) der Ellipse und der Schwerkraftrichtung auf den Dichtring gemessen in Drehrichtung der Welle kleiner als 90° ist.

# F I G. I

# F I G. 2

# F I G. 3

# F I G. 4